# DEMANDE DE BREVET EUROPEEN

(11) **EP 2 484 511 A1**
(43) Date de publication de la demande: **08.08.2012**
(21) Numéro de dépôt: 12153773.2
(22) Date de dépôt: 03.02.2012
(51) Int. Cl.: B29C 65/08

(54) **Dispositif de soudure par ultrasons**

(30) Priorité: 03.02.2011 FR 1150851
(71) Demandeur: MV 2, 13760 Saint-Cannat (FR)
(72) Inventeur: De Campredon, Jean-Marie, 13090 Aix en Provence (FR)
(74) Mandataire: Tetaz, Franck Claude Edouard

(57) **Abrégé**

La présente invention concerne un dispositif destiné à la soudure par ultrasons d'au moins une bande de film entraînée par des moyens d'entraînement selon une direction de défilement, le dispositif comprenant au moins une sonotrode (2), remarquable en ce que le dispositif comprend au moins une enclume (51) animée d'un mouvement alternatif de rotation entre deux angles et le centre de rotation de l'enclume étant lui-même animé d'un mouvement alternatif de translation, ces deux mouvements étant synchronisés entre eux à l'aide de moyens de commande.

## Description

### DOMAINE DE L'INVENTION

La présente invention concerne le domaine technique général des dispositifs et procédés pour créer des cordons de soudure transversaux à partir d'au moins une bande de film en utilisant l'énergie à ultrasons pour réaliser les cordons de soudure.

### PRESENTATION DE L'ART ANTERIEUR

Le principe du soudage par ultrasons de bandes de film est connu. Il consiste à faire passer les bandes de film à assembler entre une sonotrode, animée d'un mouvement vibratoire ultrasonore et une enclume. La soudure est produite par l'échauffement de la zone de contact entre les films, provoqué par le mouvement vibratoire et par la pression exercée entre la sonotrode et l'enclume.

Dans le mode de réalisation « en continu », les bandes de film défilent sans interruption, le soudage ayant lieu pendant le défilement. Lorsque l'on souhaite réaliser, à haute vitesse de défilement, des soudures transversales au sens de défilement des films, on connaît des dispositifs dans lesquels l'enclume est portée par un cylindre en rotation, d'axe perpendiculaire au sens de défilement des films, et la vitesse périphérique de l'enclume étant égale à la vitesse de défilement des films. Dans ce mode de réalisation, la sonotrode est fixe, seule l'enclume en forme de cylindre est en rotation.

Ce type de dispositif permet le soudage par ultrasons transversalement au sens de défilement des films à relativement haute vitesse mais il ne permet pas de répondre de façon économique au besoin, présent dans de nombreuses applications, consistant à pouvoir changer la distance entre deux soudures sur les films en défilement.

Afin de pallier cet inconvénient, on connaît un dispositif dans lequel le cylindre en rotation portant l'enclume est animé d'une vitesse de rotation variable au cours de sa révolution.

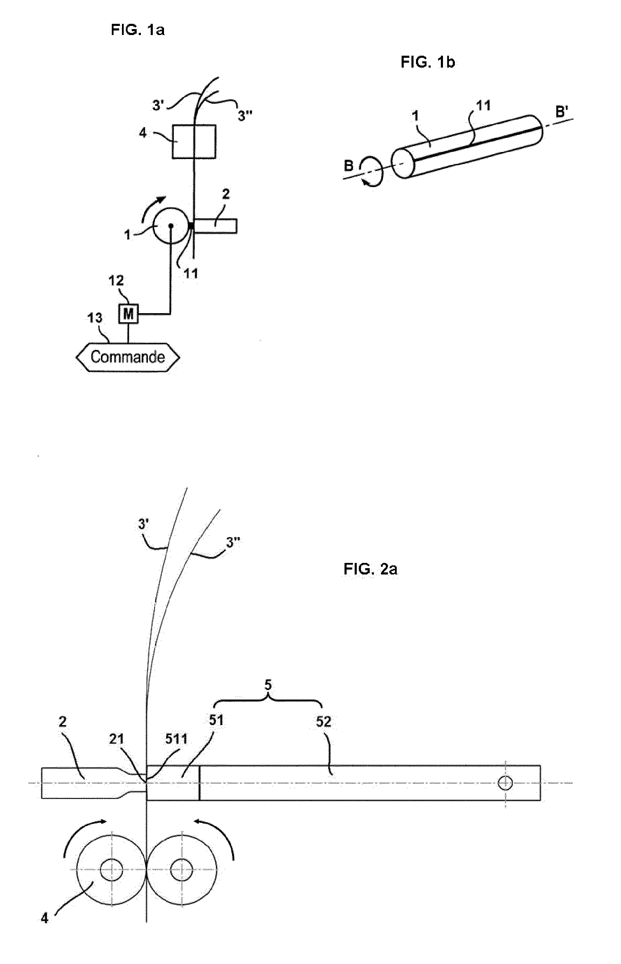

On a illustré en figure 1 un exemple d'un tel dispositif de soudage transversal utilisant les ultrasons selon l'art antérieur.

Le dispositif comprend au moins un cylindre 1 et au moins une sonotrode 2 disposée en regard du cylindre 1. Ce dispositif permet la réalisation de soudures transversales au sens de défilement à partir de deux bandes superposées de matériau 3', 3" - contenant par exemple un matériau thermoplastique - qui sont déroulées de façon continue entre le cylindre 1 et la sonotrode 2.

Le cylindre 1 comprend sur sa face latérale au moins une enclume 11 permettant de réaliser une soudure transversale entre les bandes de film. Pendant l'opération de soudage, l'enclume 11 est entraînée en rotation par le cylindre à la même vitesse circonférentielle que la vitesse de défilement des bandes 3', 3". Lorsque l'enclume 11 vient en vis-à-vis de la sonotrode 2 par l'intermédiaire des bandes de film 3', 3", celles-ci sont soudées par ultrason selon le motif de l'enclume 11.

La rotation du cylindre 1 est assurée par un moteur 12 - par exemple un moteur électrique - connecté à des moyens de commande 13. Les moyens de commande 13 permettent de faire varier la vitesse de rotation du moteur 12 et donc la vitesse angulaire du cylindre 1. Ceci permet de réaliser des soudures transversales plus ou moins rapprochées sur les bandes de film 3', 3".

Plus précisément, les moyens de commande sont aptes à faire varier la vitesse angulaire du cylindre 1 lors d'une révolution, en dehors de l'opération de soudage, afin de faire varier la longueur de bandes de film qui aura défilé entre deux instants pendant lesquels l'enclume et la sonotrode sont face à face.

Ce dispositif s'affranchit de la contrainte de devoir changer le cylindre portant la ou les enclumes à chaque changement de la distance entre les soudures transversales. Pour ce faire, le cylindre est entraîné, par des moyens de commande, à une vitesse de rotation variable au cours de chacune de ses révolutions.

Cependant, on se heurte à une difficulté de réalisation majeure, à savoir la nécessité de faire varier rapidement la vitesse d'un ensemble massif, ce qui conduit à un dimensionnement disproportionné des moyens d'entraînement, voire à une limite technologique lorsque l'on souhaite trop réduire la distance entre deux soudures transversales.

Un autre inconvénient de l'art existant avec un dispositif ultrasons est que le diamètre du cylindre portant la ou les enclumes est limité pour des raisons aussi bien technologiques qu'économiques. D'une part, l'encombrement et la difficulté d'entraîner à vitesse variable limitent de fait le diamètre de ce cylindre. D'autre part, l'amplitude vibratoire à l'extrémité d'une sonotrode étant de l'ordre de quelques dizaines de µm, il est nécessaire que les tolérances de positionnement de l'extrémité de l'enclume soit largement inférieures à cette valeur, ce qui conduit à des coûts de réalisation de plus en plus élevés en fonction du diamètre du cylindre.

Or, il s'avère que le procédé de soudage par ultrasons tire avantage d'un diamètre de cylindre porte-enclumes le plus grand possible lorsque celui-ci est disposé face à une sonotrode. En effet, plus le rayon à l'extrémité de l'enclume est grand, plus la largeur utile de sonotrode lui faisant face dans le sens du défilement sera grande. Il s'ensuit une meilleure progressivité du soudage et une moindre demande de puissance ultrasonore instantanée. Cette demande de puissance ultrasonore instantanée est particulièrement élevée dans le cas d'une soudure transversale, puisque toute l'énergie sera consommée dans le temps très bref pendant lequel l'enclume et la sonotrode se sont face. La limitation du diamètre du cylindre portant l'enclume représente en conséquence un inconvénient majeur pour ce procédé.

Un but de la présente invention est de proposer un procédé et un dispositif de soudage de bandes de films par ultrasons transversalement au sens de défilement des films permettant de pallier les différents inconvénients de l'art existant.

### RESUME DE L'INVENTION

A cet effet, l'invention propose un dispositif de soudure par ultrasons comprenant au moins une sonotrode et un ensemble de réaction comportant au moins une enclume pour le soudage d'au moins une bande de film entraînée entre l'enclume et la sonotrode par des moyens d'entraînement selon une direction de défilement,
**caractérisé en ce que** le dispositif comprend :
- des moyens de déplacement linéaire pour déplacer l'ensemble de réaction en translation entre une position dite « de frappe » et une position dite « de retrait», l'enclume étant plus proche de la sonotrode dans la position de frappe que dans la position de retrait,
- des moyens de déplacement angulaire pour déplacer l'ensemble de réaction en rotation autour d'un axe de rotation contenu dans un plan perpendiculaire à la direction de défilement entre une position dite « d'attaque » et une position dite « de repos », l'angle de rotation de l'ensemble de réaction entre les positions d'attaque et de repos étant non nul et inférieur à 180°, préférentiellement comprise entre 1° et 30°, et encore plus préférentiellement entre 3° et 10°;
- des moyens de contrôle pour commander les moyens de déplacement linéaire et angulaire de l'ensemble de réaction.

La combinaison de mouvements de translation et de rotation de l'ensemble de réaction permet d'obtenir un ensemble de réaction présentant les mêmes avantages qu'un cylindre de diamètre important muni d'une enclume, mais sans ses inconvénients. Notamment ces caractéristiques de l'invention permettent de limiter l'encombrement du dispositif de soudage par ultrason. Ces caractéristiques permettent également d'entraîner à vitesse variable un ensemble de réaction équivalent à un cylindre de diamètre important muni d'une enclume.

Dans une variante de réalisation, les moyens de déplacement angulaire comprennent une liaison pivot à une extrémité de l'ensemble de réaction, ladite liaison pivot s'étendant dans le plan médian de la sonotrode. Le fait que la liaison pivot s'étende dans le plan médian de la sonotrode permet d'aligner l'ensemble de réaction avec la sonotrode lorsque l'effort de soudure est maximum, c'est-à-dire lorsque l'entrefer (i.e. distance entre la sonotrode et l'enclume) est minimum, et donc de configurer l'ensemble de réaction avec une rigidité maximale.

Les moyens de déplacement angulaire peuvent comprendre une bielle connectée à un moteur par l'intermédiaire d'un mécanisme d'excentrique. Ceci permet d'obtenir une rotation alternative de l'ensemble de réaction simple, efficace et précise.

Les moyens de déplacement linéaire peuvent comprendre une genouillère. Ceci permet d'une part d'obtenir un positionnement précis de l'enclume et d'autre part d'obtenir un ensemble très rigide axialement lorsque les éléments de la genouillère sont alignés.

La genouillère peut être connectée à un moteur par l'intermédiaire d'au moins une vis à billes. L'utilisation d'une vis à billes présente de nombreux avantages. La vis à billes présente :
- une importante efficacité de renversement pour la conversion d'un mouvement longitudinal en mouvement de rotation,
- une grande longévité grâce au frottement par roulement sans usure, au faible auto-échauffement et à la faible consommation de lubrifiant,
- un positionnement très précis grâce à des écrous sans jeu à l'inversion de marche.

L'utilisation d'une vis à billes permet également d'utiliser les moyens de déplacement linéaire à grandes vitesses de translation. Enfin, l'utilisation d'une vis à billes permet de limiter la puissance motrice nécessaire pour l'entrainement de la genouillère en raison de son rendement important.

La genouillère peut être liée à pivotement à un support fixe par l'une de ses extrémités et à au moins un palier monté coulissant sur une glissière par son autre extrémité. La connexion à un support fixe permet au dispositif de supporter les efforts générés par la sonotrode lorsque l'enclume est dans la position de frappe. La connexion au palier monté coulissant sur une glissière permet de maintenir la genouillère dans un plan, et de préférence confondu avec le plan médian de la sonotrode de sorte qu'à l'effort de soudure maximum, la genouillère et la sonotrode soient alignées.

Les moyens de contrôle peuvent être programmés pour commander simultanément :
- les moyens de déplacement linéaire pour déplacer l'ensemble de réaction de la position de frappe à la position de retrait,
- les moyens de déplacement angulaire pour déplacer l'ensemble de réaction de la position de repos à la position d'attaque.

Ceci permet de diminuer le temps nécessaire pour remettre l'enclume en position active afin de réaliser la soudure suivante.

Les moyens de déplacement angulaire et linéaire peuvent comprendre chacun un moteur, les moyens de contrôle étant aptes à faire varier la vitesse de rotation de l'un ou l'autre desdits moteurs. Ceci permet de faire varier la distance entre deux soudures successives sans nécessiter le changement de certaines pièces du dispositif de soudage.

L'ensemble de réaction peut comprendre un bras porte-enclume s'étendant sensiblement dans un plan, et des moyens de serrage pour fixer de manière amovible l'enclume à l'extrémité libre du bras porte-enclume. Ceci permet un remplacement simple et rapide de l'enclume sur le bras porte-enclume.

L'invention concerne également un procédé de soudure par ultrasons d'au moins une bande de film entraînée par des moyens d'entraînement selon une direction de défilement entre au moins une sonotrode et un ensemble de réaction comportant au moins une enclume, **caractérisé en ce que** le procédé comprend :
- le déplacement de l'ensemble de réaction en translation entre une position dite « de frappe » et une position dite « de retrait», l'enclume étant plus proche de la sonotrode dans la position de frappe que dans la position de retrait,
- le déplacement de l'ensemble de réaction en rotation autour d'un axe de rotation contenu dans un plan perpendiculaire à la direction de défilement entre une position dite « d'attaque » et une position dite « de repos », l'angle de rotation de l'ensemble de réaction entre les positions d'attaque et de repos étant non nul et inférieur à 180°.

En d'autres termes, l'invention concerne également un procédé de soudage par ultrasons d'au moins une bande de film entraînée par des moyens d'entraînement selon une direction de défilement, remarquable en ce que le procédé comprend la mise en rotation alternée d'au moins une enclume entre deux angles et le centre de rotation de l'enclume étant lui-même animé d'un mouvement alternatif de translation, ces deux mouvements étant synchronisés entre eux à l'aide de moyens de commande.

### BREVE DESCRIPTION DES DESSINS

D'autres avantages et caractéristiques du dispositif et du procédé selon l'invention ressortiront mieux de la description qui va suivre de plusieurs variantes d'exécution, données à titre d'exemples non limitatifs, à partir des dessins annexés sur lesquels :
- les figures 1a, 1b illustrent un dispositif de soudage par ultrason de l'art antérieur ;
- les figures 2a, 2b et 2c illustrent un mode de réalisation du dispositif selon l'invention ;
- la figure 3 illustre un mode de réalisation permettant la synchronisation de la vitesse de rotation d'enclume avec celle de défilement des bandes;
- la figure 4 illustre un mode de réalisation permettant la synchronisation de la position en translation de l'ensemble de réaction avec sa rotation ;
- la figure 5 illustre les diagrammes de synchronisation au cours d'un cycle des mouvements alternatifs circulaire et de translation de l'ensemble de réaction
- la figure 6 illustre un mode de réalisation des mécanismes du dispositif selon l'invention.

### Description détaillée de l'invention

### Principe général

Le dispositif est destiné à la soudure par ultrasons d'au moins une bande de film entraînée par des moyens d'entraînement selon une direction de défilement. Le dispositif comprend au moins une sonotrode, et au moins une enclume animée d'un mouvement alternatif de rotation entre deux angles et le centre de rotation de l'enclume étant lui-même animé d'un mouvement alternatif de translation, ces deux mouvements étant synchronisés entre eux à l'aide de moyens de commande.

On entend, dans le cadre de la présente invention, par « mouvement alternatif », un mouvement de l'enclume alternativement dans un sens puis en sens opposé.

Avantageusement, l'enclume peut être supportée par un bras porte-enclume. L'enclume et le porte-enclume peuvent comporter des moyens de serrage permettant le démontage et le remontage de l'enclume sur le bras porte-enclume avec un positionnement précis. Ces moyens de serrage permettent également de réaliser une surface de contact maximale entre l'enclume et le porte-enclume afin de faciliter la transmission des vibrations ultrasonores.

Le bras porte-enclume peut être monté à rotation sur un axe parallèle à l'enclume et perpendiculaire au sens de défilement des bandes de film. L'axe de rotation du bras porte-enclume peut être supporté par au moins un palier. Des moyens d'entraînement communiquent au bras porte-enclume un mouvement de rotation alternatif entre deux angles, dont le sommet est l'axe de rotation du bras porte-enclume.

Dans un mode réalisation, les moyens d'entraînement pour communiquer ce mouvement de rotation alternatif comportent un mécanisme à excentrique accouplé à un moteur électrique dont on pilote la vitesse de rotation en fonction du temps.

Le dispositif peut comprendre des moyens de commande aptes à faire varier la vitesse angulaire de l'enclume entre les étapes de soudage et les étapes où l'enclume revient à sa position initiale avant une nouvelle étape de soudage.

La vitesse angulaire associée à l'étape de soudage peut être établie de sorte que la vitesse tangentielle de l'extrémité de l'enclume soit égale à la vitesse de défilement du film.

La vitesse angulaire associée à l'étape de retour à la position initiale peut être établie en fonction de la distance souhaitée entre deux soudures transversales, distance que l'on peut faire varier à l'aide des moyens de commande sans avoir besoin de remplacer un composant par un autre ou sans recours à un outillage ou un réglage particulier.

L'axe de rotation du bras porte-enclume peut être lui-même animé d'un mouvement de translation alternatif dans une direction sensiblement perpendiculaire à la direction de défilement des films, mouvement qu'il communique à l'enclume via le bras porte-enclume.

Dans un mode de réalisation, ce mouvement de translation alternatif est assuré par un mécanisme à genouillère, lui-même mis en mouvement par un bras articulé entraîné par un écrou complémentaire d'une vis à billes. La vis à billes est entraînée en rotation entre deux angles par un moteur électrique dont la vitesse est pilotée à l'aide de moyens de commande. Afin de faciliter le mouvement de translation de l'axe du porte-enclume, les paliers supportant l'axe sont montés sur des glissières s'étendant dans le sens de la translation.

Avantageusement, l'axe de rotation du bras porte-enclume peut se déplacer sensiblement dans le plan médian de la sonotrode fixe. De même, le plan médian dans lequel s'exercent les efforts dans le mécanisme à genouillère peut avantageusement être confondu avec le plan médian de la sonotrode.

### Présentations de différents modes de réalisation en référence aux figures

On va maintenant décrire plus en détail le dispositif et le procédé selon l'invention en référence aux figures.

Le dispositif selon l'invention permet la réalisation, par ultrasons, de soudures transversales au sens de défilement d'une (ou plusieurs) bande(s) de film déroulée(s) en continu.

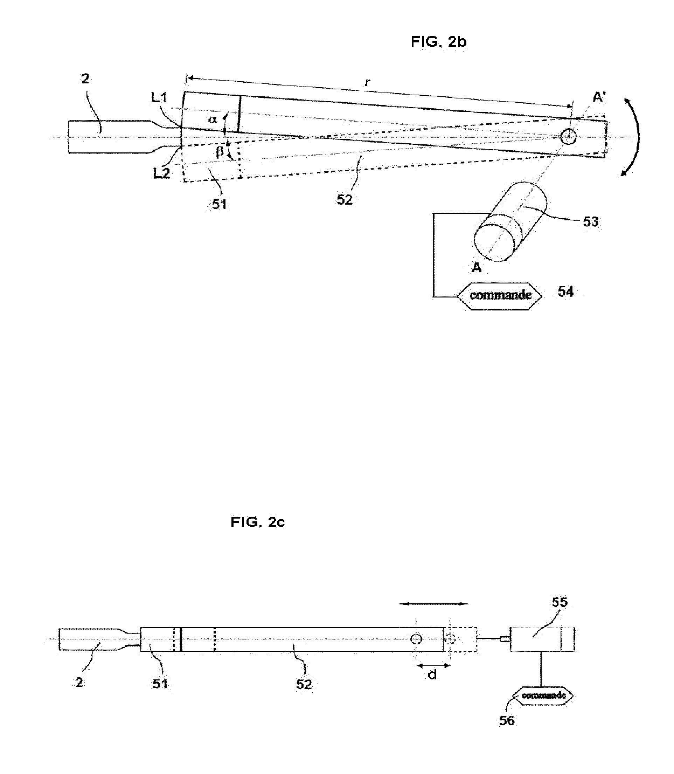

En référence à la figure 2, on a illustré un mode de réalisation du dispositif selon l'invention. Le dispositif comprend des moyens d'entraînement de la bande de film 4, une sonotrode 2 et un ensemble de réaction 5,

Les moyens d'entraînement 4 permettent de dérouler et d'entraîner de façon ininterrompue les bandes de films 3', 3" superposées pour la réalisation des soudures transversales. Ces bandes de film 3', 3" sont déroulées et entraînées à la même vitesse de défilement pour assurer un bon maintien de la superposition des bandes de film. Les moyens d'entraînement 4 peuvent être de différents types connus de l'homme du métier. Les moyens d'entraînement 4 sont par exemple des rouleaux ou disques presseurs motorisés, des bandes aspirantes motorisées, des courroies ou bandes presseuses motorisées, etc.

Les bandes de films 3', 3" défilent entre l'ensemble de réaction 5 et la sonotrode 2. L'ensemble de réaction 5 comprend une enclume 51 dont l'extrémité 511 vient au contact d'un des films à souder lors du soudage et un bras porte-enclume 52. L'extrémité 511 de l'enclume 51 fait saillie et s'étend parallèlement à l'extrémité active 21 de la sonotrode 2.

L'ensemble de réaction 5 et la sonotrode 2 permettent la réalisation des soudures transversales des bandes de film 3',3" lorsque celles-ci sont mises en pression entre l'enclume et la sonotrode.

Le principe de fonctionnement du dispositif selon l'invention est le suivant. La première bande de film 3', est déroulée de manière continue, ininterrompue, à haute vitesse. La deuxième bande de film 3", est déroulée en vis-à-vis de la première bande de film 3', à la même vitesse. La deuxième bande de film 3" est ensuite plaquée sur le premier film 3', puis l'ensemble de réaction 5 et la sonotrode 2 de soudure par ultrasons sont mis en oeuvre.

L'ensemble de réaction 5 est animé de deux mouvements synchronisés entre eux à l'aide de moyens de commande.

Le premier mouvement est un mouvement circulaire alternatif, d'axe AA' parallèle à la face active 21 de la sonotrode et situé dans le plan médian de la sonotrode, entre deux angles respectivement α et β du plan médian de l'ensemble de réaction. Le mouvement circulaire alternatif est assuré par des moyens d'entraînement 53, comportant par exemple un moteur électrique, associés à des moyens de commande 54. Les moyens de commande 54 permettent par exemple de faire varier la vitesse de rotation du moteur électrique et donc la vitesse angulaire de l'ensemble de réaction 5.

Le second mouvement est un mouvement de translation alternatif d'amplitude « d » entre une position dite « de frappe », où l'extrémité de l'enclume 511 va presser les films en cours de défilement 3', 3" contre l'extrémité de la sonotrode 21, et une position dite « de retrait », permettant de dégager un espace suffisant pour que l'extrémité de l'enclume 511 ne soit pas au contact des films. Le mouvement de translation alternatif est assuré par des moyens d'entraînement 55, comportant par exemple un moteur électrique, associés à des moyens de commande 56. Les moyens de commande 56 permettent par exemple de faire varier la vitesse de rotation du moteur électrique et donc la vitesse de translation de l'axe de rotation de l'ensemble de réaction 5.

On peut définir par convention qu'un cycle de soudage commence lorsque l'ensemble de réaction 5 est en position de translation dite « de frappe » et en position de rotation dite « d'attaque » à l'angle α.

Le cycle se déroule en quatre étapes pendant lesquelles les bandes de film 3',3" sont en défilement continu :
1 - étape de soudage pendant laquelle l'ensemble de réaction 5 se déplace en face de la sonotrode 2 par un mouvement circulaire jusqu'à l'angle dit « de repos » β en restant en position de translation dite « de frappe». Pendant cette étape, la vitesse linéaire de l'extrémité de l'enclume 511 est égale à la vitesse de défilement des films 3',3" afin de réaliser leur soudage entre l'extrémité 21 de la sonotrode et l'extrémité 511 de l'enclume 51. La vitesse de translation de l'axe de rotation est nulle pendant cette étape.
2 - déplacement de l'ensemble de réaction 5 selon un mouvement de translation à sa position dite « de retrait »,
3 - retour de l'ensemble de réaction 5 à l'angle α selon un mouvement de rotation de sens contraire à celui utilisé lors de l'étape de soudage,
4 - déplacement de l'ensemble de réaction 5 en position dite « de frappe » selon un mouvement de translation, afin de la positionner pour commencer un nouveau cycle de soudage.

Les étapes 2 et 3 (respectivement 3 et 4) peuvent avantageusement être partiellement ou totalement simultanées.

De la description ci-dessus il ressort que plus on effectuera rapidement les mouvements des étapes 2 à 4, en augmentant par exemple la vitesse des moteurs électriques à l'aide des moyens de commande, plus vite on reviendra au début d'un nouveau cycle de soudage. Les bandes de film défilant à vitesse constante, la réduction du temps nécessaire pour effectuer la totalité de ces trois mouvements conduit à une diminution de la distance entre deux soudures transversales.

De la même façon, un allongement du temps alloué aux étapes 2 à 4, consécutif par exemple d'un ralentissement de la vitesse des moteurs, conduira à une augmentation de l'espacement entre deux soudures transversales.

Ceci permet de réaliser des soudures transversales plus ou moins rapprochées sur les bandes de film 3', 3".

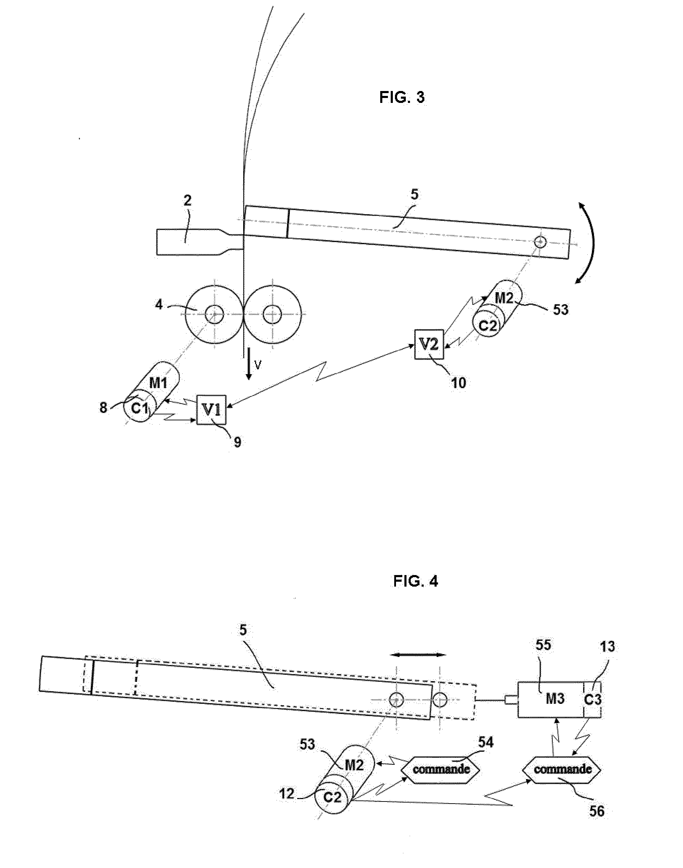

En référence à la figure 3, on a illustré un mode de réalisation permettant la synchronisation de la vitesse de rotation d'enclume avec celle de défilement des bandes.

Le principe de synchronisation, pendant l'étape de soudage, de la vitesse circonférentielle de l'extrémité 511 de l'enclume 51 avec la vitesse de défilement des bandes de film est par exemple le suivant.

Les bandes de film sont entraînées à une vitesse de défilement V donnée par les moyens d'entraînement 4 qui comprennent par exemple une motorisation électrique M1.

Il est possible d'obtenir un signal électrique représentatif de cette vitesse V en utilisant des moyens de mesure de vitesse 8 tels qu'un codeur ou une dynamo tachymétrique.

Ce signal est utilisé par un variateur 9 des moyens d'entrainement 4 pour réguler la vitesse V. Ce même signal provenant des moyens de mesure 8 est injecté via le variateur 9 comme consigne de vitesse dans un second variateur 10 du moteur 53 entrainant en rotation alternée l'ensemble enclume 5 de façon à synchroniser les vitesses respectives des moyens d'entrainement des bandes de film et de l'enclume.

La synchronisation de la vitesse de rotation de l'enclume avec la vitesse de défilement des films est au minimum assurée entre un angle α dont le premier côté s'appuie sur le plan médian de la sonotrode, le deuxième côté s'appuyant sur le plan médian de l'ensemble enclume passant par l'axe de rotation lorsque la génératrice L1 d'entrée (selon la direction de défilement) de l'extrémité 511 de l'enclume n'est plus en vis-à-vis de l'extrémité 21 de la sonotrode, et un angle β dont le premier côté s'appuie sur le plan médian de la sonotrode, le deuxième côté s'appuyant sur le plan médian de l'ensemble de réaction passant par l'axe de rotation lorsque la génératrice L2 de sortie (selon la vitesse de défilement) de l'extrémité 511 de l'enclume n'est plus en vis-à-vis de l'extrémité 21 de la sonotrode. L'arc entre ces deux angles délimite la zone dans laquelle au moins un point de l'extrémité de la sonotrode 2 est en regard d'un point de l'extrémité de l'enclume 51.

En dehors de cet arc entre les angles α et β, l'ensemble de réaction 5 peut être accéléré ou décéléré en rotation indépendamment de la vitesse de défilement V des bandes de films de façon à assurer la variabilité souhaitée du pas entre soudures.

En référence à la figure 4, on a illustré un mode de réalisation permettant la synchronisation de la position en translation de l'ensemble de réaction 5 avec sa position en rotation.

L'ensemble de réaction 5 est entraîné en rotation alternée par un moteur électrique 53. La position angulaire du moteur 53, et en conséquence celle de l'ensemble de réaction 5, est connue par des moyens de mesure 12 comme par exemple un codeur. Les moyens de commande 54 utilisent la mesure de position angulaire issue du codeur 12 pour réguler la position angulaire du moteur 53 au cours de sa révolution. De façon semblable, le moteur 55, assurant le mouvement de translation de l'ensemble de réaction 5, est associé à un moyen de mesure de la position angulaire 13, tel qu'un codeur par exemple. Les moyens de commande 56 utilisent la mesure de position angulaire issue du codeur 13 pour réguler la position angulaire du moteur 55 au cours de sa révolution. L'ensemble de réaction 5 étant lié mécaniquement au moteur 55, la position angulaire du moteur 53 détermine la position en translation de l'ensemble de réaction. La synchronisation du mouvement alternatif de translation avec le mouvement alternatif de rotation est assurée par l'information donnée par le codeur 12 qui est transmise aux moyens de commande 56 du moteur 55.

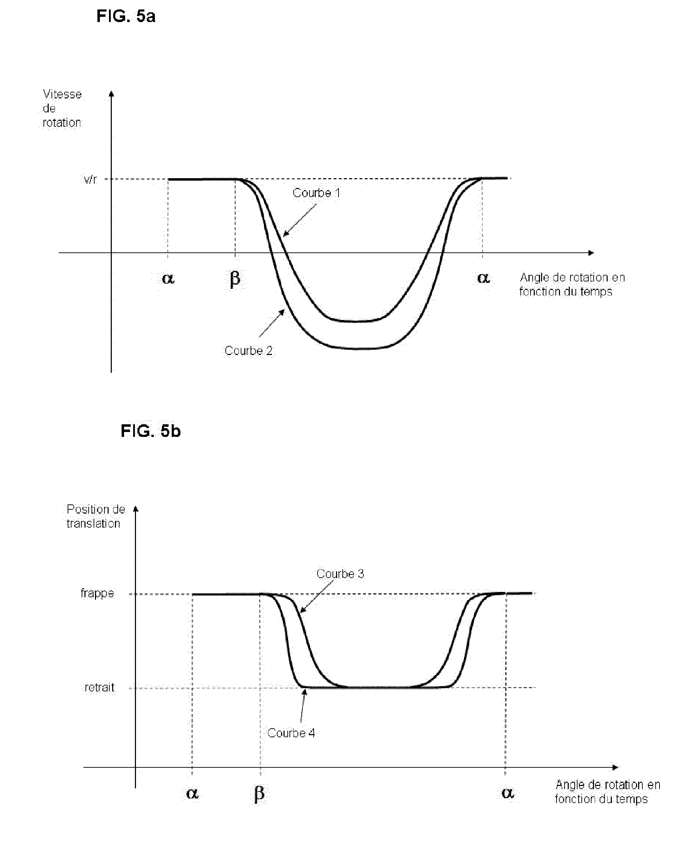

En référence aux diagrammes de la figure 5, on a illustré la synchronisation au cours d'un cycle des mouvements alternatifs circulaire et de translation de l'ensemble de réaction 5.

Selon la figure 5a, la vitesse de rotation de l'ensemble de réaction 5 entre les angles α et β reste constante, la position en translation étant fixe en position « de frappe » entre les angles α et β.

Les courbes 1 et 2 montrent deux exemples possibles de variation de la vitesse de rotation entre les angles β et α. La courbe 2, présentant une vitesse de rotation supérieure à celle de la courbe 1, permettra de réaliser des soudures transversales dont l'espacement sera inférieur à l'espacement obtenu avec une courbe de vitesse de rotation telle que 1. L'homme du métier aura compris que les courbes de vitesse de rotation entre les angles β et α peuvent prendre une infinité de formes. Avantageusement, on choisira une forme de courbe qui minimise les accélérations, donc les efforts supportés par les mécanismes, tout en réalisant l'espacement voulu entre deux soudures.

La figure 5b montre que l'ensemble de réaction est en position de translation fixe dite « de frappe » entre les angles α et β. Lors de la rotation entre les angles β et α, l'ensemble de réaction se déplace d'une distance d jusqu'à atteindre la position dite « de retrait », puis revient à la position « de frappe ». Ici encore, une pluralité de courbes de positions est possible. Avantageusement, l'homme du métier privilégiera une courbe de positions qui minimise les accélérations, donc les efforts supportés par les mécanismes, tout en réalisant l'amplitude de translation souhaitée entre les angles β et α.

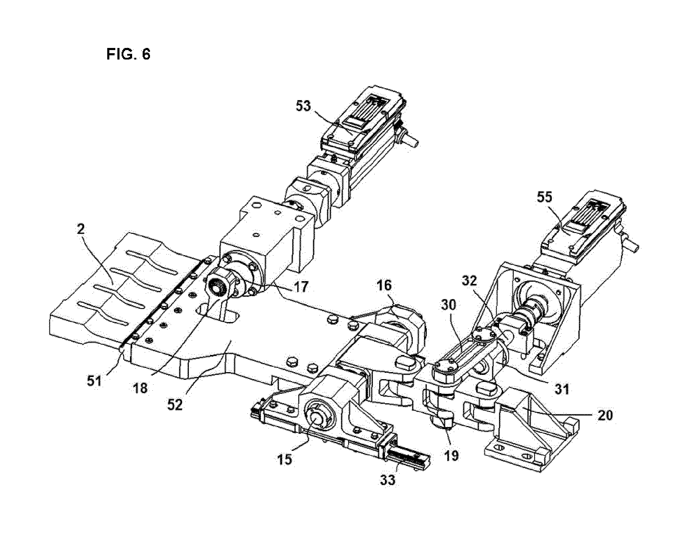

En référence à la figure 6 on a illustré un mode de réalisation des mécanismes du dispositif selon l'invention. Le bras porte enclume 52 supporte par exemple au moins une enclume 51 s'étendant selon la largeur à souder des films 3', 3". Le bras porte enclume est monté à rotation sur un arbre 15 parallèle à la face active 21 de la sonotrode 2. L'arbre 15 est supporté et guidé en rotation par au moins un palier 16. Avantageusement, l'axe de rotation est inclus dans le plan médian de la sonotrode. Le bras porte enclume est mis en rotation alternée au moyen par exemple d'un mécanisme à excentrique 17 et d'une bielle 18, eux-mêmes entraînés par un moteur électrique 53. D'autres exemples de mise en rotation alternée du bras porte enclume peuvent être réalisés, tels qu'un mécanisme bielle-manivelle, un mécanisme à cames, un vérin électrique par exemple, sans sortir matériellement des nouveaux enseignements présentés ici.

Le mouvement de translation alternée est avantageusement assuré par une genouillère 19 prenant appui, d'une part sur une pièce solidaire du bâti de la machine 20, d'autre part sur l'arbre 15 autour duquel la rotation alternée du bras porte enclume 52 a lieu. L'intérêt du mécanisme à genouillère est que celle-ci peut être fermée (éléments alignés) et supporter rigidement un effort important de soudage lorsque l'ensemble de réaction est en position « de frappe » entre les angles de rotation α et β. Avantageusement, la genouillère sera dessinée afin que les efforts qu'elle reçoit et transmet soient situés dans le plan médian de la sonotrode 2 et passant par l'axe de rotation AA'. Dans un mode de réalisation du dispositif, la genouillère est avantageusement actionnée par un bras articulé 30 solidaire d'un écrou 31 entraîné par exemple par une vis à billes 32. La vis à billes est mise en rotation alternée au moyen par exemple d'un moteur électrique doté de ses moyens de commande. La rotation du moteur et de la vis à billes dans un sens, éloigne par exemple l'écrou du moteur. Le bras articulé transmet ce mouvement à la genouillère qui se ferme alors, amenant le porte enclume 52 en position « de frappe ». La rotation inverse du moteur, amène de nouveau la genouillère en position ouverte et le bras porte enclume en position « de retrait ». Le mouvement de translation de l'ensemble enclume est guidé par au moins une glissière 33, sur laquelle coulisse le palier 16.

Ainsi et afin de pallier les difficultés liées au dispositif de l'art antérieur décrit précédemment, l'invention permet de réaliser des soudures transversales par ultrasons sur des bandes de films en défilement continu, l'intervalle entre les soudures étant rendu variable par l'application à un ensemble de réaction d'un mouvement alternatif circulaire et d'un mouvement alternatif de translation, les vitesses des deux mouvements étant contrôlées et synchronisées par des moyens de commande. Les amplitudes des mouvements sont faibles, ce qui n'était pas le cas du dispositif décrit dans l'art antérieur. Dans l'art antérieur, le cylindre devait exécuter un mouvement de rotation de forte amplitude pour assurer le retour à sa position initiale après l'étape de soudage, ce qui conduisait à un dimensionnement disproportionné des moyens d'entraînement, notamment du moteur. La distance minimale entre deux soudures transversales que l'on peut obtenir avec un tel dispositif est également contrainte par les limites technologiques des moyens d'entraînement. Au contraire de l'art antérieur, la présente invention réalise un mouvement de rotation alternée de faible amplitude, l'amplitude du mouvement de retour du bras porte enclume après l'étape de soudage étant du même ordre que l'amplitude du mouvement pendant l'étape de soudage soit un angle α+β. La présente invention conduit donc à un dimensionnement plus économique que dans l'art antérieur des moyens de mise en mouvement ainsi qu'à une réduction de la distance minimale réalisable entre deux soudures transversales.

Un autre avantage majeur de la présente invention réside dans le fait que le rayon de rotation de l'extrémité de l'enclume face à la sonotrode peut être beaucoup plus important que dans l'art antérieur. En effet, on a vu que l'augmentation du rayon d'un cylindre porte-enclume selon l'art antérieur se heurtait à des contraintes technologiques mais également à une augmentation importante de l'inertie de rotation du cylindre en fonction du rayon. Cette augmentation d'inertie est incompatible avec le besoin d'effectuer un mouvement de rotation rapide entre deux étapes de soudage. Au contraire de l'art antérieur, le bras articulé porte-enclume possède, à rayon égal, une inertie de rotation beaucoup plus faible que celle du cylindre. Cette caractéristique autorise l'utilisation d'un bras porte-enclume de rayon plus élevé que dans le cas d'un cylindre avec les bénéfices consécutifs qui ont été décrits en matière de procédé de soudage par ultrasons.

L'homme du métier aura compris que de nombreuses modifications peuvent être apportées au dispositif et au procédé décrit ci-dessus sans sortir matériellement des nouveaux enseignements présentés ici. Il est donc bien évident que les exemples qui viennent d'être donnés ne sont que des illustrations particulières en aucun cas limitatives. Par exemple, le dispositif ci-dessus décrit pour souder une (ou plusieurs) bande(s) de film le long de soudures transversales peut également être utilisé pour réaliser des découpes transversales par ultrasons.

## Revendications

1. Dispositif de soudure par ultrasons comprenant au moins une sonotrode (2) et un ensemble de réaction (51, 52) comportant au moins une enclume (51) pour le soudage d'au moins une bande de film entraînée entre l'enclume (51) et la sonotrode (2) par des moyens d'entraînement selon une direction de défilement,
**caractérisé en ce que** le dispositif comprend :
- des moyens de déplacement linéaire (16, 19, 30, 31, 32, 33, 55) pour déplacer l'ensemble de réaction (51, 52) en translation entre une position dite « de frappe » et une position dite « de retrait», l'enclume (51) étant plus proche de la sonotrode (2) dans la position de frappe que dans la position de retrait,
- des moyens de déplacement angulaire (15, 17, 18, 53) pour déplacer l'ensemble de réaction (51, 52) en rotation autour d'un axe de rotation (A-A') contenu dans un plan perpendiculaire à la direction de défilement entre une position dite « d'attaque » et une position dite « de repos », l'angle de rotation de l'ensemble de réaction entre les positions d'attaque et de repos étant non nul et inférieur à 180°,
- des moyens de contrôle (54, 56) pour commander les moyens de déplacement linéaire et angulaire de l'ensemble de réaction.

2. Dispositif de soudure selon la revendication précédente, dans lequel les moyens de contrôle (54, 56) sont programmés pour commander simultanément :
- les moyens de déplacement linéaire (16, 19, 30, 31, 32, 33, 55) pour déplacer l'ensemble de réaction de la position de frappe à la position de retrait,
- les moyens de déplacement angulaire (15, 17, 18, 53) pour déplacer l'ensemble de réaction de la position de repos à la position d'attaque.

3. Dispositif de soudure selon l'une des revendications précédentes, dans lequel les moyens de déplacement angulaire et linéaire comprennent chacun un moteur (53, 55), les moyens de contrôle (54, 56) étant aptes à faire varier la vitesse de rotation de l'un ou l'autre desdits moteurs (53, 55).

4. Dispositif de soudure selon l'une des revendications précédentes, dans lequel les moyens de déplacement angulaire (15, 17, 18, 53) comprennent une liaison pivot (15) à une extrémité de l'ensemble de réaction (51, 52), ladite liaison pivot s'étendant dans le plan médian de la sonotrode.

5. Dispositif de soudure selon l'une des revendications précédentes, dans lequel les moyens de déplacement angulaire (15, 17, 18, 53) comprennent une bielle (18) connectée à un moteur (53) par l'intermédiaire d'un mécanisme d'excentrique (17).

6. Dispositif de soudure selon l'une des revendications précédentes, dans lequel les moyens de déplacement linéaire (16, 19, 30, 31, 32, 33, 55) comprennent une genouillère (19).

7. Dispositif de soudure selon la revendication précédente, dans lequel la genouillère (19) est connectée à un moteur (55) par l'intermédiaire d'au moins une vis à billes (30).

8. Dispositif de soudure selon l'une des deux revendications précédentes, dans lequel la genouillère (19) est liée à pivotement à :
- un support (20) fixe par l'une de ses extrémités et
- au moins un palier (16) monté coulissant sur une glissière (33) par son autre extrémité.

9. Dispositif de soudure selon l'une des revendications précédentes, dans lequel l'ensemble de réaction (5) comprend en outre un bras porte-enclume (52) s'étendant sensiblement dans un plan, et des moyens de serrage pour fixer de manière amovible l'enclume (51) à l'extrémité libre du bras porte-enclume.

10. Procédé de soudure par ultrasons d'au moins une bande de film entraînée par des moyens d'entraînement selon une direction de défilement entre au moins une sonotrode et un ensemble de réaction comportant au moins une enclume, **caractérisé en ce que** le procédé comprend :
- le déplacement de l'ensemble de réaction en translation entre une position dite « de frappe » et une position dite « de retrait», l'enclume étant plus proche de la sonotrode dans la position de frappe que dans la position de retrait,
- le déplacement de l'ensemble de réaction en rotation autour d'un axe de rotation contenu dans un plan perpendiculaire à la direction de défilement entre une position dite « d'attaque » et une position dite « de repos », l'angle de rotation de l'ensemble de réaction entre les positions d'attaque et de repos étant non nul et inférieur à 180°.
